Europäisches Patentamt

European Patent Office

Office européen des brevets

(11) Veröffentlichungsnummer: **0 351 394**
A2

# (12) EUROPÄISCHE PATENTANMELDUNG

(21) Anmeldenummer: **89890162.4**

(22) Anmeldetag: **12.06.89**

(51) Int. Cl.⁵: **C 02 F 3/28**

(30) Priorität: **15.06.88 AT 1553/88**

(43) Veröffentlichungstag der Anmeldung:
**17.01.90 Patentblatt 90/03**

(84) Benannte Vertragsstaaten:
**BE CH DE ES FR GB GR IT LI LU NL SE**

(71) Anmelder: **VOEST-ALPINE MONTAGE GESELLSCHAFT M.B.H.**
**Dieselstrasse 2**
**A-4600 Wels Oberösterreich (AT)**

(72) Erfinder: **Joas, Emil, Mag.**
**Hatschekstrasse 2**
**A-4840 Vöcklabruck (AT)**

(74) Vertreter: **Itze, Peter, Dipl.-Ing. et al**
**Patentanwälte Casati, Wilhelm, Dipl.-Ing. Itze, Peter,**
**Dipl.-Ing. Amerlingstrasse 8**
**A-1061 Wien (AT)**

(54) **Verfahren zur Maximierung der Methanausbeute bei gleichzeitiger Minimierung des Schwefelwasserstoffanfalles beim Eintrag kommunaler und/oder industrieller organischer Abfälle in Kläranlagen.**

(57) Verfahren zur Erhöhung der Methanausbeute bei der Vergärung kommunaler und/oder industrieller organischer Abfälle, wobei das Verfahren in wenigstens zwei getrennten Stufen durchgeführt wird, von denen die erste eine Säuerungsstufe und die zweite die Methanbildungsstufe ist, wobei beide Stufen als gemischte Gärung geführt wird, wobei in der Säuerungsstufe bereits eine Methangärung und in der Methangärungsstufe noch eine Säuregärung, vorzugsweise Essigsäuregärung, vorgenommen wird.

EP 0 351 394 A2

**Beschreibung**

## Verfahren zur Maximierung der Methanausbeute bei gleichzeitiger Minimierung des Schwefelwasserstoffanfalles beim Eintrag kommunaler und/oder industrieller organischer Abfälle in Kläranlagen

Die Erfindung bezieht sich auf ein Verfahren zur Erhöhung der Methanausbeute bei der Vergärung kommunaler und/oder industrieller organischer Abfälle, wobei das Verfahren in wenigstens zwei getrennten Stufen durchgeführt wird, von denen die erste eine Säuerungsstufe und die zweite eine Methanbildungsstufe ist.

Die anaerobe Behandlung von organisch hochbelasteten Schlämmen ist ein in der Klärtechnik seit etwa 100 Jahren angewandtes Verfahren. Danach wird der zu behandelnde Schlamm in einem einzigen Reaktionsraum (Faulturm) bei Temperaturen um 35° C umgewälzt und unter schwach alkalischen Bedingungen ausgefault, wobei Faulgas, ein Gemisch aus den wesentlichen Bestandteilen Methan und Kohlendioxid, erzeugt wird. Dabei tritt das Problem auf, daß trotz der erreichten regelungstechnischen Perfektion die nach wie vor vorhandene Empfindlichkeit des Verfahrens gegenüber Belastungsstößen Schwierigkeiten in der Verfahrensführung bereitet. Diese Empfindlichkeit gegenüber Belastungsstößen beruht darauf, daß die Faulung in mehreren Schritten abläuft, an denen jeweils verschiedene Mikroorganismengruppen beteiligt sind:
- Hydrolyse makromolekularer Verbindungen zu niedermolekularen,
- saure Vergärung dieser niedermolekularen Verbindungen zu Fettsäuren und Alkoholen,
- alkalische Methanfaulung von Fettsäuren und Alkoholen.

Da die Methanbakterien um etwa eine Größenordnung langsamer wachsen als die Mikroorganismen der Hydrolyse und sauren Gärung, führen Belastungsstöße mit hohen Konzentrationen an leicht abbaubaren Substanzen, wie z.B. Zucker, zu einer Übersäuerung des Reaktors, die von den Methanbakterien, die im sauren Medium ohnehin verschlechterte Umgebungsbedingungen vorfinden, nur langsam wieder kompensiert werden kann. Um daher das Verfahren bezüglich der Belastungsstöße elastischer gestalten zu können, ist es notwendig, beide Reaktionen, nämlich die Hydrolyse und saure Gärung einerseits und die Methanfaulung andererseits räumlich getrennt durchzuführen. Durch diese Maßnahme wird es möglich, die beiden Verfahrensprozesse bei jeweils optimalen Bedingungen durchzuführen und damit zugleich die Durchsatzleistung des Verfahrens zu erhöhen.

Es ist bereits ein Verfahren der eingangs genannten Art bekannt, bei welchem organische Stoffe enthaltende Abwässer mit Hilfe einer zweistufigen, anaeroben Fermentation verarbeitet werden, wobei in der ersten Stufe eine Säurefermentation unter solchen Bedingungen stattfindet, daß sich optimale Voraussetzungen für die in der zweiten Stufe erfolgende Methanfermentation einstellen. In der ersten Fermentationsstufe erfolgt dabei die Bildung von flüchtigen Fettsäuren, Milchsäure oder Äthanol, wobei als Prozeßbedingungen das pH, die Temperature der Zufluß an zu verarbeitendem Material und der Gehalt an gelösten Feststoffen geregelt werden. Weiters erfolgt in der ersten Stufe die Zugabe von Nährstoffen, die Entfernung von Schwefelwasserstoff, die Entfernung von Nitrit- und Nitrationen sowie die Entfernung von Ammoniak. Dieses bekannte Verfahren hat den Nachteil, daß für die Essiggärung, die im ersten Reaktionsgefäß ausgeführt wird, der pH-Wert sehr niedrig gehalten wird, und zwar auf etwa 5,2 bis 5,5, was sich nur durch eine permanente Chemikalienzugabe erreichen läßt. Es erfolgt nämlich ausschließlich eine reine Säuregärung, bei welcher sich zudem eine hohe $H_2S$-Konzentration einstellt. Dieses $H_2S$ muß durch Strippen entfernt werden, da sonst die Methanfermentation im zweiten Fermenter gehemmt werden würde. Weiters ist bei dem bekannten Verfahren die Zugabe von Stickstoff und Phosphor als Nährstoff notwendig. Im Zulauf vorhandene Sulfate werden in der ersten Stufe zu Sulfid reduziert und anschließend als Schwefelwasserstoff entfernt. Ebenso wird zur Vermeidung toxischer Mengen von Ammoniak dieser vor der zweiten Stufe durch Strippen eliminiert. Schließlich entsteht durch eine teilweise Schlammabtrennung nach der ersten Stufe eine zusätzliches Ensorgungsproblem.

Der Erfindung liegt die Aufgabe zugrunde, ein Verfahren der eingangs genannten Art zu schaffen, in welchem die Konzentration von $H_2S$ im Produktgas so gering ist, daß eine nachfolgende Entschwefelung des Produktgases entfallen kann, und trotzdem keine korrosiven Auswirkungen bei der anschließenden Verwertung, z.B. in Verbrennungsmotoren, auftreten. Gleichzeitig soll eine Maximierung der Methanausbeute, was eine Qualitätsverbesserung des Produktgases ergibt, erreicht werden.

Erfindungsgemäß wird die Aufgabe dadurch gelöst, daß beide Stufen als gemische Gärungen geführt werden, wobei in der Säuerungsstufe bereits eine Methangärung und in der Methangärungsstufe noch eine Säuregärung, vorzugsweise eine Essigsäuregärung, vorgenommen wird. Durch die Methangärung in der ersten Stufe wird erreicht, daß die Stoffwechselprodukte der Säurebildner nicht reaktionshemmend hohe Konzentrationen für die Methangärung erreichen. Bei der Essigsäuregärung erfolgt der Aufschluß von stickstoffhältigen Pflanzen unter Bildung von Ammoniaksalzen, jener für die methanbildenden Bakterien einzig verwertbaren Stickstoffquelle. Durch die Methangärung im ersten Reaktionsraum wird eine ausreichende Stoffwechselentgiftung für die nachfolgende Methangärung im zweiten Fermenter gewährleistet. Das Auftreten toxischer Konzentrationen an Nitrat bzw. Nitrit wird bereits durch Belüften des Abwassers im vorgeschalteten Belebtschlammbecken vermieden, was bereits Stand der Technik ist. Zufolge der Säuregärung in der Methanbildungsstufe wird der pH-Wert der Methangärung selbsttätig so geregelt, daß immer der optimale pH-Wert erhalten ist.

Vorteilhafterweise kann in der Säuerungsstufe der Anteil der Methangärung zwischen 20 und 40 %, vorzugsweise 30 %, und in der Methanbildungsstufe der Anteil der Säuregärung gleichfalls 20 bis 40 %, vorzugsweise 30 %, der Gesamtgärung betragen. Das genaue Verhältnis zwischen Methangärung und Säuregärung in den einzelnen Stufen hängt vom eingesetzten Material ab, doch soll die Methangärung in der Säuregärung nicht unter 20 % liegen, da es sonst, wie schon angeführt, zu einer Anreicherung von die Methanbildung in der Methanbildungsstufe hemmenden Substanzen kommen kann. Der pH-Wert kann in der Säuerungsstufe zwischen 6,0 und 6,9 und in der Methanbildungsstufe zwischen 7,0 und 7,6 gehalten werden. Diese Werte können in der Regel durch entsprechende Zufuhr bzw. Einschränkung der Zufuhr von Frischsubstrat (Belebtschlamm aus Belebtschlammbecken) bzw. des Umpumpens von der ersten in die zweite Stufe gehalten werden, womit der Zusatz von Pufferchemikalien od. dgl. vermieden wird.

Bei einer besonders bevorzugten Ausführung kann in der Säuerungsstufe die pH-Regelung über die Zufuhr von Frischschlamm durchgeführt werden, wobei zur Erhöhung des pH-Wertes die Frischschlammzugabe vermindert, und zur Absenkung des ph-Wertes die Frischschlammzugabe verstärkt wird. Durch die Frischschlammzugabe wird nämlich die Essiggärung erhöht, was ein Absenken des pH-Wertes bewirkt. Bei Verringerung der Frischschlammzugabe überwiegt dann bereits die Methangärung, wodurch bei entsprechender Verweildauer der pH-Wert ansteigt.

In gleicher Weise kann in der Methanbildungsstufe die pH-Regelung über die Zugabe von Schlamm aus der Säuerungsstufe durchgeführt werden, wobei zur Erhöhung des pH-Wertes die Schlammzufuhr gesenkt und zur Absenkung des pH-Wertes erhöht wird. Ist nämlich der pH-Wert zu tief, dann kommt kein bzw. nur wenig neues Material aus der Säuerungsstufe dazu, wodurch aufgrund der alkalischen Methangärung der pH-Wert angehoben wird. Bei zu hohem pH-Wert wird Schlamm aus der Säuerungstufe in erhöhtem Maß zugeführt, z.B über die Verdrängungsleitung, wodurch dann aufgrund des niedrigeren pH-Wertes in der Säuerungsstufe der pH-Wert in der Methanstufe abgesenkt wird.

Für eine besonders effektive Vergärung kann die Temperatur in der Säuerungsstufe zwischen 22 und 29° C, vorzugsweise auf 27° C, und in der Methanbildungsstufe zwischen 27 und 37° C, vorzugsweise auf 30° C, gehalten werden. Die Regelung der Temperatur erfolgt dabei in herkömmlicher Weise über Wärmetauscher, und zwar dadurch, daß der Frischschlamm vom Voreindicker über einen Wärmetauscher geführt wird, bevor er in die Säuerungsstufe eintritt. In gleicher Weise kann zwischen Säuerungsstufe und Methanbildungsstufe ein Wärmetauscher zwischengeschaltet sein, um gegebenenfalls die Temperatur von der Säurebildungstemperatur auf die Methanbildungstemperatur anzuheben.

Um in den einzelnen Stufen die Ausbildung von Zonen unterschiedlicher Gärungsstadien zu verhindern, kann das Gärgut in beiden Verfahrensstufen durchmischt werden. Dies wird in üblicher Weise über Umwälzleitungen der Fermentatoren bewirkt, wobei von unten aus dem Behälter die Schlammsuspension abgezogen und von oben wieder auf den Behälter aufgegeben wird. Falls der Frischschlamm vom Voreindicker zu niedrige Temperatur aufweist, kann das Gärgut vor Einbringung in die Säuerungsstufe auf Reaktionstemperatur erwärmt werden. Sowohl durch das angeführte Umpumpen des Fermenterinhalts als auch durch das Anwärmen in den Wärmeaustauschern wird eine Temperaturkonstanz über den gesamten Reaktor erzielt und durch das Mischen eine Schichtbildung verhindert. Diese Schichtbildung würde nämlich so aussehen, daß von oben nach unten zuerst eine Schicht vorliegt, in der die Säuregärung stattfindet, gefolgt von einer Schicht, die aus Schlamm und Wasser besteht, wobei darunter noch eine Schlammschicht vorliegt, in welcher die eigentliche Methangärung stattfindet. Die Durchmischung könnte dabei auch mit üblichen Schaufelrührern erfolgen.

Um genügend Fläche für die Bakterienansiedlung zu erzielen, ohne daß es zu Durchmischungs- und damit zu Kontaktproblemen kommt, kann der Feststoffgehalt des Gärgutes zwischen 1,5 % und 12 %, vorzugsweise zwischen 2 und 9 %, gehalten werden. Da die Mengen an Nährstoffen, bezogen auf die Anzahl der an der Ausfaulung beteiligten Mikroorganismen, sowie der Kontakt zwischen Nährstoffen und Bakterien für Umfang und Verlauf der Schlammfaulung von entscheidender Bedeutung ist, kann das Verhältnis von Stickstoff zu Kohlenstoff im Substrat zwischen 0,06 bis 0,1 eingehalten werden. Bei zu hohem Stickstoff-Kohlenstoff-Verhältnis des Substrates werden wegen der geringen Energieanlieferung, und bei zu kleinem Kohlenstoff-Stickstoff-Verhältnis wegen des Stickstoffmangels Entwicklungshemmungen auftreten.

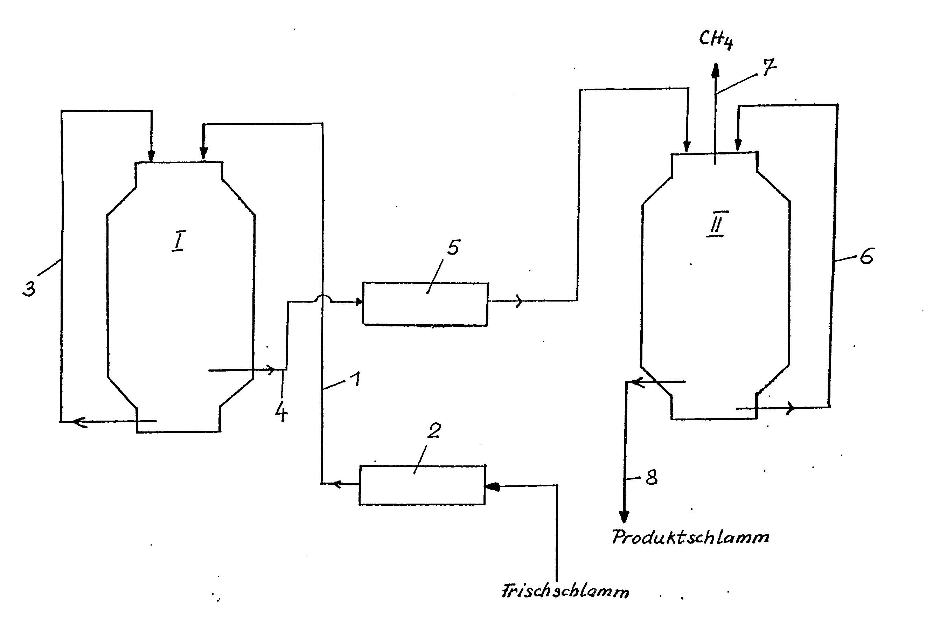

In der Zeichnung ist schematisch ein Schaltbild einer Anlage zur Ausführung des erfindungsgemäßen Verfahrens dargestellt.

Mit I ist der Säuerungsfermenter bezeichnet, und mit II der Methanbildungsfermenter. In den Säuerungsfermenter I wird über die Leitung 1 Frischschlamm aus einem Voreindicker eingeführt, und zwar über einen Wärmetauscher 2, über welchen der Frischschlamm gegebenenfalls auf Reaktionstemperatur im Säuerungsfermenter I aufgeheizt wird. Das Gärgut wird im Fermenter über eine Umwälzleitung 3 umgewälzt und dadurch durchgemischt, was einerseits eine einheitliche Temperatur ergibt und andererseits das Ausbilden von Schichten verhindert. Das abgegorene Substrat wird über die Leitung 4 aus dem Säuerungsfermenter I über einen Wärmetauscher 5 in den Methanbildungsfermenter II eingeleitet, in welchem das Gärgut über die Umwälzleitung 6 umgewälzt wird. Das gebildete Produktgas, im wesentlichen $CH_4$, wird über die Leitung 7 abgezogen, und der fertige Produktschlamm wird über die Leitung 8 zu einem nicht dargestellten Nacheindicker geleitet. Das annähernd kontinuierliche Verfahren sieht einen etwa zweistündigen Zyklus vor. Die Beschickung des Säuerungsfermenters I erfolgt über einen Zeitraum von einer halben Stunde, nach einer etwa zweistündigen Verweilzeit des Materials erfolgt dann die Überführung in den zweiten Fermenter.

Da die Säuerungsgeschwindigkeit etwa doppelt so hoch wie die Methanbildungsgeschwindigkeit abläuft, ist der Säuerungsfermenter I nur etwa halb so groß wie der Methanbildungsfermenter II.

Bei dem erfindungsgemäßen Verfahren liegt die Sulfidkonzentration bei etwa $10^{-4}$ bis $10^{-5}$ Mol/l, eine Konzentration, bei der die höchste spezifische Methanbildungsrate erreicht wird, welche zugleich ein Redox-Potential von - 330 mVolt gewährleistet. Die Methanbildung erfolgt nur etwa bei diesem Redox-Potential. Dieses Redox-Potential ist seinerseits für die Nahrungsaufnahme der Bakterien wichtig und durch die Osmose durch die Bakterienwand notwendig. Es muß deshalb so genau beachtet werden, weil die Bakterien ansonsten austrocknen können. Dieses tiefe Redox-Potential läßt sich aber nicht durch Sauerstofffreiheit erreichen, sondern bedarf unbedingt eines gewissen Reduktionsmittels, wie z.B. Sulfid. Bei diesen Verfahrensbedingungen weist das Produktgas dann eine $H_2S$-Konzentration von 2 bis 3 ppm auf, was unter dem gängigen Grenzwert für die Verwendung in Verbrennungsmotoren liegt, welcher Grenzwert etwa 5 ppm beträgt.

Der über die Leitung 1 eingebrachte Frischschlamm aus einem Belebtschlammbecken weist einen pH-Wert von etwa 6,3 bis 6,7 auf, wobei der aus dem Säuerungsbehälter I austretende Schlamm einen pH-Wert von etwa 6,7 aufweist. Mit diesem pH-Wert geht das über die Leitung 4 umgepumte Gärgut in den Wärmetauscher 5, in welchem dann das Material auf etwa 30° C erwärmt wird. Nachdem der pH-Wert sehr stark vom Einsatzmaterial und der Temperatur abhängig ist, erfolgt im Wärmetauscher von selbst eine Anhebung des pH-Wertes auf etwa 6,8 bis 6,9, wodurch für den Ausgang der Methanbildungsstufe bereits optimale Werte eingestellt werden. Der pH-Wert des aus dem zweiten Fermenter ausgetragenen Produktschlammes liegt dann zwischen 7,1 und 7,3. Es zeigt sich also, daß der pH-Wert in beiden Stufen allein durch die gemischte Gärführung ziemlich konstant gehalten wird, wodurch für die Aufrechterhaltung der optimalen pH-Werte keinerlei Chemikalienzugabe erforderlich ist.

Die hohe Betriebssicherheit, die dadurch erreicht wird, ist bei herkömmlichen Verfahren, welche im wesentlichen nur mit einem Faulbehälter ausgeführt werden, nicht zu erzielen, weil aufgrund der diskontinuierlichen Zuführung von Nährstoffen und pH-Regelmittel Stoßbelastungen in der Gärung auftreten, welche durch das eigene Reaktionssystem nicht abgepuffert werden können. Dieses Abpuffern wird durch das erfindungsgemäß gemischte Verfahren aufgrund der Säuregärung im Methanbildungssystem erreicht.

Weiters wird durch das erfindungsgemäße Verfahren erreicht, daß der jeweils höchstmögliche Trockensubstanzgehalt erzielt wird, un zwar durch die optimierte Säure-und Methangärung, da es dadurch zu einer maximalen Faulwasserabgabe und praktisch zu einem vollständigen Abbau der kolloidalen Schlammbestandteile kommt. Weiters kommt es zu einem wesentlich weitergehenden Zelluloseabbau als bei bisherigen vergleichbaren Verfahren, und zwar eben zufolge der gemischten Gärführung, weil dort konstante Populationen in ihren optimalen Lebensbedingungen geführt werden. Durch dieses sich selbst steuernde Verfahren mit Rückkoppelung ist eine wesentliche Erhöhung der Faulraumbelastung von derzeit üblicherweise 3 bis maximal 5 kg OTS/m³ und Tag auf 10 kg bei gleichzeitiger Steigerung der Gasausbeute von rund 200 l pro kg OTS auf 500 l erreicht.

**Patentansprüche**

1. Verfahren zur Erhöhung der Methanausbeute bei der Vergärung kommunaler und/oder industrieller organischer Abfälle, wobei das Verfahren in wenigstens zwei getrennten Stufen durchgeführt wird, von denen die erste eine Säuerungsstufe und die zweite die Methanbildungsstufe ist, dadurch gekennzeichnet, daß beide Stufen als gemischte Gärung geführt wird, wobei in der Säuerungsstufe bereits eine Methangärung und in der Methangärungsstufe noch eine Säuregärung, vorzugsweise Essigsäuregärung, vorgenommen wird.

2. Verfahren nach Anspruch 1, dadurch gekennzeichnet, daß in der Säuerungsstufe der Anteil der Methangärung 20 - 40 %, vorzugsweise 30 %, und in der Methanbildungsstufe der Anteil der Säuregärung gleichfalls 20 - 40 %, vorzugsweise 30 %, der Gesamtgärung beträgt.

3. Verfahren nach Anspruch 1 oder 2, dadurch gekennzeichnet, daß der pH-Wert in der Säuerungsstufe zwischen 6,0 und 6,9 und in der Methanbildungsstufe zwischen 7,0 und 7,6 gehalten wird.

4. Verfahren nach Anspruch 3, dadurch gekennzeichnet, daß in der Säuerungsstufe die pH-Regelung über die Zufuhr von Frischschlamm durchgeführt wird, wobei zur Erhöhung des pH-Wertes die Frischschlammzugabe vermindert und zur Absenkung des pH-Wertes die Frischschlammzugabe verstärkt wird.

5. Verfahren nach Anspruch 3, dadurch gekennzeichnet, daß in der Methanbildungsstufe die pH-Regelung über die Zufuhr von Schlamm aus der Säuerungsstufe geregelt wird, wobei zur Erhöhung des pH-Wertes die Schlammzufuhr gesenkt und zur Absenkung des pH-Wertes erhöht wird.

6. Verfahren nach einem der Ansprüche 1 bis 5, dadurch gekennzeichnet, daß die Temperatur in der Säuerungsstufe zwischen 22 und 29° C, vorzugsweise auf 27° C, und in der Methanbildungsstufe zwischen 27 und 37° C, vorzugsweise auf 30° C, gehalten wird.

7. Verfahren nach einem der Ansprüche 1 bis 6, dadurch gekennzeichnet, daß das Gärgut in beiden Verfahrensstufen durchmischt wird.

8. Verfahren nach einem der Ansprüche 1 bis 7, dadurch gekennzeichnet, daß das Gärgut vor Einbringung in die Säuerungsstufe auf Reaktionstemperatur erwärmt wird.

9. Verfahren nach einem der Ansprüche 1 bis 8, dadurch gekennzeichnet, daß der Feststoffgehalt des Gärgutes zwischen 1,5 und 12 %, vorzugsweise zwischen 2 und 9 %, gehalten wird.

10. Verfahren nach einem der Ansprüche 1 bis 9, dadurch gekennzeichnet, daß das Verhältnis von N : C im Substrat zwischen 0,06 bis 0,1 eingehalten wird.

11. Verfahren nach einem der Ansprüche 1 bis 10, dadurch gekennzeichnet, daß in der Methanbildungsstufe ein Redox-Potential von - 330 mVolt eingehalten wird.

CH₄

*Produktschlamm*

*Frischschlamm*

EP 0 351 394 A2